(19) Europäisches Patentamt
European Patent Office
Office européen des brevets

(11) **EP 4 524 778 A1**

(12) **EUROPEAN PATENT APPLICATION**

(43) Date of publication:
**19.03.2025 Bulletin 2025/12**

(21) Application number: **23197459.3**

(22) Date of filing: **14.09.2023**

(51) International Patent Classification (IPC):
**G06F 17/18** $^{(2006.01)}$  **B60W 60/00** $^{(2020.01)}$
**G06T 7/292** $^{(2017.01)}$  **G06V 10/00** $^{(2022.01)}$

(52) Cooperative Patent Classification (CPC):
**G06F 17/18; B60W 60/00; G06F 18/24155; G06V 20/56**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Continental Automotive Technologies GmbH**
**30175 Hannover (DE)**

(72) Inventors:
• **Neuhöfer, Jonas**
  **81739 München (DE)**
• **Dr. Reichardt, Jörg**
  **81739 München (DE)**

(74) Representative: **Continental Corporation**
**c/o Continental Automotive Technologies GmbH**
**Intellectual Property**
**Putzbrunnerstr. 69**
**81739 München (DE)**

(54) **COMPUTER PROGRAM, APPARATUS, VEHICLE, AND METHOD FOR A BAYES FILTER OR SMOOTHER**

(57)   Embodiments of the present disclosure relate to a computer program, an apparatus, a vehicle, and a method for a Bayes filter or smoother. The method comprises obtaining an observation of an object state. Further, the method comprises determining the object state based on a joint Student's t-distribution. Determining the object state comprises approximating the joint Student's t-distribution of distributions for an object state estimate in a previous time step, a process noise, and the observation. The joint Student's t-distribution is based on a first and at least one second parameter. Determining the object state comprises adapting the first parameter and the second parameter.

100

| Obtaining an observation of an object state | 110 |

↓

| Determining the object state based on a joint Student's t-distribution | 120 |

Fig. 1

EP 4 524 778 A1

**Description**

Embodiments of the present disclosure relate to a computer program, an apparatus, a vehicle, and a method for a Bayes filter or smoother. In particular, the proposed concept relates to an approach for determining an object state using a joint Student's t-distribution for an object state estimate in a previous time step, a process noise, and an observation of the object state.

Bayes filter and smoother play an increasingly important role in processing data, e.g., sensor data. In practice, e.g., they are applied in robotics, assisted or autonomous driving systems, and signal processing.

Particularly in those fields such as robotics, autonomous systems, and signal processing, one problem is the unreliability of measurements of dynamic quantities that are of interest (collectively called "true state"), such as the position of a foreign object, its velocity and its acceleration. This unreliability can be caused by sensor limitations (e.g., estimating 3D coordinates or velocities from a 2D static image), sensor uncertainty/noise (e.g. when deciding which radar/lidar measurements were produced by the same object) and the dynamic nature of the processes involved (i.e. the underlying state will have changed between two observations). Some quantities also can't be measured directly (e.g., accelerations) and have to be inferred over multiple time steps.

One attempt to solve this problem is Bayesian filtering which provides for using past observations to create a probability distribution of the most likely true state at a current timestep. This may require two models: one that shows how the system's state changes over time and another that shows how observations are produced from the true state. Additional stochastic 'process noise' and 'observation noise' models are used to account for model errors and non-deterministic processes. The most common realization of this approach is the Kalman Filter, which assumes all stochastic models (i.e., state estimates, process noise and observation noise) to be Gaussian distributions. This has the advantage that all transformations of these probability distributions can be performed analytically, which results in a very efficient algorithm.

However, in many real-world scenarios, the distribution of observation noise is not Gaussian, and measurements are contaminated with outliers, i.e., measurements that are highly improbable under the Gaussian noise assumption. Especially in high-level functions, such as object detection from camera data, very inaccurate or simply wrong measurements come about, which a system based on Gaussian distributions is unable to handle. Outlier measurements in the naive Kalman Filter will result in extremely unrealistic state estimations since the algorithm explains the observed outlier as a combination of both an extremely large process noise and extremely large observation noise.

A standard heuristic is to simply ignore measurements outside a confidence region around the current state, a method which is called 'gating'.

Other methods are based on intuitive concepts. For example, they focus on the aspect that outliers cannot be reasonably explained by Gaussian models. Some of them therefore propose to simply increase the observation noise covariance matrix at the timestep of the outlier until it can be explained reasonably. Some extend this approach by also considering outliers in the underlying process. Further ones introduce 'stochastic similarity measures' to maximize the similarity between predicted future state and updated state after consideration of the observation, as well as the similarity of expected observation and actual observation.

However, this intuitive character makes it difficult to understand why and how reliable these methods work and more importantly, how to improve them and how to adapt their advantages to other methods and use cases.

Alternatively, one can derive filtering algorithms replacing the Gaussian assumption with more realistic observation noise models, which can produce outliers. In particular, some concepts use Gaussian distributed observation noise, where the covariance matrix itself is a random variable. They proposed Variational Bayes approaches to alternatively estimate the unknown covariance matrix and the updated state vector. Some other concepts apply a gating scheme for further stabilization.

Furthermore, the noise distribution used may have a closed form description even without further knowledge of the sampled covariance matrix. This distribution is called Student-t distribution. This distribution can be used to develop an outlier robust filter using Bayes rule and the inherited properties from the Gaussian distribution. However, these properties can only be exploited when also having Student-t state estimate and process noise models. The Student-t distribution may be approximated by a mixture model of a Gaussian distribution and an outlier producing distribution with large covariance (either Student-t or Gaussian). Estimating how likely each distribution produced the observation allows for an informed convex combination of state updates from both models. This can be interpreted as a 'soft-gating' scheme.

For cases, where the covariance matrix changes unpredictably but slowly over time, an 'interacting multiple model' approach may be used. However, this does not apply to some use cases, e.g., in automotive applications for environment sensing where the covariance matrix may change rapidly.

Some of the concepts depend on various hyperparameters without clear guidance or intuition on their effects, such that they must be tweaked manually for each application on a subset of the actual problem set. And that without guarantees on the generality of their performance. Especially, similarity measures must be chosen arbitrarily, without any clear understanding of how the choice of different functions will affect the outcome.

Iterations in the Variational Bayes or general convex optimization methods can easily become computationally intensive, especially if they require many matrix multiplications and inversions or require the convergence of high-dimensional parameters.

Furthermore, since the covariance matrix can only make weak statements about the relation between the true state and observed sample, estimations of the covariance matrix may be too uncertain.

"Gating" and "soft-gating" methods have the real risk of following noisy measurements on a tangent away from the true state and then classifying all further actual reliable measurements as outliers and ignore them.

Some concepts provide for filters based on the Student-t distribution that show similar behavior as the naive Kalman Filter in that the estimated means still follow all outliers, resulting in impossible 'jumping' trajectories.

Further approaches require the calculation of integrals that can only be solved numerically which is highly computationally intensive.

Hence, there may be a demand for an improved concept of a Bayes filter or smoother to overcome the above problems.

This demand may be satisfied by the subject-matter of the appended independent patent claims. Further beneficial embodiments are disclosed in the dependent patent claims.

Embodiments of the present disclosure provide a method for a Bayes filter or smoother. The method comprises obtaining an observation of an object state. Further, the method comprises determining the object state based on a joint Student's t-distribution. Determining the object state comprises approximating the joint Student's t-distribution of distributions for an object state estimate in a previous time step, a process noise, and the observation. The joint Student's t-distribution is based on a first and at least one second parameter. Determining the object state comprises adapting the first parameter and the second parameter.

For this, embodiments of the proposed method provide for obtaining an analytic description of a Student-t distribution approximating the joint distribution of an object state estimate of a previous time step, an unknown process noise affecting the change of the object state in between the timesteps and an unknown observation noise affecting the quality of the observation of the object state. In more detail, the method comprises defining two parameters for the approximating joint distribution (in this context synonymously used for joint Student's t-distribution), defining their value given perfect knowledge of the unknown noises and true object state, and finding good approximations of these values based on the available observations.

On one hand, the joint Student's t-distribution provides that the filter or smoother is less sensitive to outliers. On the other hand, the first and the second parameter allow a less computationally intensive solution for the object state. So, the present approach provides a resource efficient and outlier robust solution for Bayes filter and smoother. This may result in a more accurate estimate of the object state and, therefore, in an improved performance of an application of the filter or smoother. In practice, the Bayes filter or smoother may be applied in automotive applications, e.g., in an assisted or autonomous driving system, for sensing a vehicle's environment. In such applications, the proposed approach, e.g., provides a more accurate estimate of the vehicle's environment and, so, allows for a more appropriate interaction of the vehicle with its environment. However, a skilled person will appreciate that other applications may profit from the benefits of the proposed approach, too.

In practice, the first parameter is a parameter for the object state estimate and the process noise and the second parameter is a parameter for the process noise. However, also other ways of parametrization may be applied.

In some embodiments, the joint Student's t-distribution is:

$$t_\nu\left(\begin{bmatrix} x_{t-1} \\ v_t \\ e_t \end{bmatrix} \middle| \begin{bmatrix} \mu_{t-1} \\ 0 \\ 0 \end{bmatrix}, \begin{bmatrix} a_t P_{t-1} & 0 & 0 \\ 0 & a_t b_t Q_t & 0 \\ 0 & 0 & R_t \end{bmatrix}\right)$$

, wherein $Q_t$ represents a process covariance for the process noise, $P_{t-1}$ represents a covariance of the object state estimate, $a_t$ represents the first parameter, $b_t$ represents the second parameter, $x_{t-1}$ represents the object state estimate, $v_t$ represents the process noise, $e_t$ represents an observation uncertainty, $\mu_{t-1}$ represents the mean state for the object state estimate at the previous time step, and $R_t$ represents a covariance for the observation uncertainty.

Determining the state of the object based on a joint Student's t-distribution may comprise solving the joint Student's t-distribution based on an approximation for the first and the second parameter.

The approximation, e.g., comprises adjusting the first and the second parameter based on the observation and one or more previous approximations.

In practice, the first parameter, e.g., is $a_t = \dfrac{\nu + p_y}{\nu + e_t^T R_t^{-1} e_t}$ and the second parameter is

$$b_t = \frac{v+p_y+p_x}{v+p_y+(x_{t-1}-\mu_{t-1})^T(P_{t-1})^{-1}(x_{t-1}-\mu_{t-1})}.$$

The approximation, e.g., comprises obtaining an initial guess for the first and the second parameter, wherein the initial guess for the first parameter is $a_t^0 = \frac{v+p_y}{v+(y_t-HF\mu_{t-1})^T R_t^{-1}(y_t-HF\mu_{t-1})}$, and the initial guess for the second parameter is $b_t^0 = \frac{v+p_y+p_x}{v+p_y+\max(p_x-2,0)\frac{v+p_y}{v+p_y+2}}$, wherein $y_t$ represents a state observation indicative of the observation, $v$, $p_y$ and $p_x$ represent degrees of freedom ($p_x$ and $p_y$ denote the dimension of the object state $x_t$ and of the observation y, respectively), $R_t$ represents a covariance for the observation uncertainty, $\mu_{t-1}$ represents the mean state for the state estimate at the previous time step, H represents an observation model, and F represents a transition model. Further, the approximation comprises refining the initial guess for the first and the second parameter.

In practice, the observation may be indicative of sensor data of a first and at least one second sensor, and the proposed method may be applied for fusing the sensor data of the first and the second sensor. In doing so, the proposed approach may provide more accurate fused sensor data than other approaches based on Gaussian distributions.

In some embodiments, the method is for the use of a vehicle, and wherein the observation is indicative of sensor data from one or more sensors of the vehicle.

As mentioned above, the proposed approach, e.g., is applied in automotive implementations. Accordingly, it may be used to characterize a traffic environment, e.g., on (public) roads. Accordingly, the object state may be an object state of an object in such an environment, e.g., of a traffic participant. However, the skilled person will appreciate that the proposed method may be also applied in other applications and for other objects.

In particular, the proposed approach may be applied for characterizing a traffic area, e.g., for classifying and/or tracking objects in the traffic area. Accordingly, the observation may be indicative of one or more traffic participants, e.g., of their motion. Hence, the state may indicate a position and/or motion of the traffic participant. In such applications, the proposed approach, e.g., allows to determine the position and/or motion more accurately. The proposed approach, e.g., is applied in assisted or autonomous driving system (ADS) for this purpose. In doing so, the proposed approach provides a higher performance of the ADS, e.g., such that the ADS may classify and/or track surrounding objects (e.g., traffic participants) more accurately and/or reliably.

In practice, one, more, or all steps of the proposed method may be executed by a computer. So, the proposed method may be a computer-implemented method.

Accordingly, embodiments of the present disclosure may provide a computer program comprising instructions which, when the computer program is executed by a computer, cause the computer to carry out the method of any one of the preceding claims.

Other embodiments provide an apparatus comprising one or more interfaces for communication and a data processing circuit configured to execute the proposed method.

In automotive applications, the proposed method may be installed on a vehicle.

Accordingly, embodiments may provide a vehicle comprising the proposed apparatus.

Embodiments shall be described in more detail below with reference to the appended drawings.

Fig. 1 shows a flow chart schematically illustrating an embodiment of the present disclosure;

Fig. 2 shows a flow chart schematically illustrating another examples of the proposed approach; and

Fig. 3 shows a block diagram schematically illustrating an embodiment of the proposed apparatus.

A Bayes filter is a probabilistic algorithm used for state estimation in systems where uncertainty is present. It utilizes Bayes' theorem to update an estimate about a state of the system based on a new observation. The Bayes filter usually provides for two steps: prediction and update.

During the prediction step, the filter uses a dynamic model of the system to project the current state forward in time while taking into account an uncertainty of such prediction. Then in the update step, it combines the predicted state with the observation using Bayes' theorem to calculate a posterior estimate distribution while taking into account an uncertainty of the observation.

So, a key idea is to continuously refine the state estimate by iteratively incorporating new information while considering the uncertainty in both the observation and the system's dynamics. This makes Bayes filters particularly valuable in applications like robotics, localization, tracking, and sensor data fusion, where accurate state estimation is crucial in the presence of noisy or incomplete data.

However, current concepts of the Bayes filter struggle estimating the state accurately for observations including outliers. The present disclosure provides an approach tackling this problem.

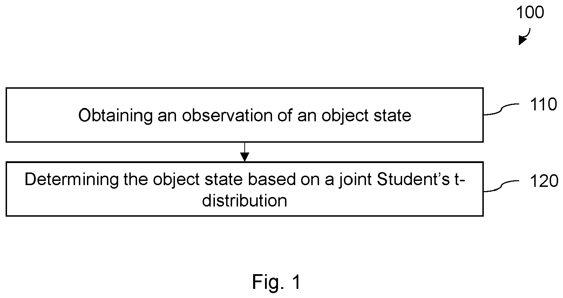

In particular, the proposed approach provides for a method of a Bayes filter or smoother, as laid out in more detail below with reference to Fig. 1.

Fig. 1 shows a flow chart schematically illustrating a method 100 for a Bayes filter or smoother.

As can be seen from the flow chart, the method 100 comprises obtaining 110 an observation of an object state. The observation, e.g., is indicative of sensor data. So, for the observation, e.g., sensor data of one or more sensors is obtained. In embodiments, the observation may include the sensor data in a raw or processed form.

In practice, the proposed approach, e.g., is applied in an ADS for tracking traffic participants in an environment of a vehicle. In such applications, the sensor data, e.g., is sensor data from environmental sensors for determining a position and/or motion of traffic participants. Accordingly, the object state may indicate a position and/or motion and the observation may be indicative of a measurement (sensor data) of the position and/or motion.

The method 100 further provides for determining 120 the object state based on a joint Student's t-distribution. In doing so, determining the object state comprises approximating the joint Student's t-distribution of distributions for an object state estimate in a previous time step, a process noise, and the observation. The joint Student's t-distribution is based on a first and at least one second parameter and determining the object state comprises adapting the first parameter and the second parameter.

The joint Student's t-distribution exhibits fatter tails than other distributions such as a Gaussian distribution. So, the joint Student's t-distribution make the filter or smoother more robust to outliers in the observation.

So, it is proposed to use (independent) Student's t-distributions for the distributions of the object state estimate in the previous time step, the process noise, and the observation However, in doing so, one problem is that independent Student-t variables usually have no joint Student's t-distribution. So, the proposed approach suggests an approximation of the joint Student's t-distribution. According to the proposed approach, an approximation of the joint Student-t distribution focuses on high accuracy mainly around the unknown true state is suggested. This may automatically result in a different behavior for outliers than for well-behaved observations. In doing so, the proposed parametrization allows for a more accurate and resource efficient way to estimate the object state.

In practice, the Bayes filter often is a Kalman filter. Therefore, examples of the proposed approach are described in more detail in connection with applications in the Kalman filter. However, the skilled person will appreciate that the present approach may be also applied in other Bayes filters or smoothers.

*Short Kalman filter proof*

To clarify the parallels to the Student's t-distribution, Kalman filter equations shall be briefly discussed below. In particular, it is shown that these are direct consequences of the following three properties of multivariate normal distributions $\mathcal{N}(\mu, \Sigma)$:

- Affine transformations: If $X \sim \mathcal{N}(\mu, \Sigma)$ and $Y = AX + b$ then

$$Y \sim \mathcal{N}(A\mu + b, A\Sigma A^{\top})$$

- Conditional distributions: If $\begin{bmatrix} X \\ Y \end{bmatrix} \sim \mathcal{N}\left( \begin{bmatrix} \mu_x \\ \mu_y \end{bmatrix}, \begin{bmatrix} \Sigma_{xx} & \Sigma_{yx}^T \\ \Sigma_{yx} & \Sigma_{yy} \end{bmatrix} \right)$ then

$$Y|X \sim \mathcal{N}(\mu_y + \Sigma_{yx}\Sigma_{xx}^{-1}(X - \mu_x), \Sigma_{yy} - \Sigma_{yx}\Sigma_{xx}^{-1}\Sigma_{yx}^T)$$

- Joint Independent Distributions: If $X \sim \mathcal{N}(\mu_x, \Sigma_x)$ and $Y \sim \mathcal{N}(\mu_y, \Sigma_y)$ are independent then they have a joint normal distribution

$$\begin{bmatrix} X \\ Y \end{bmatrix} \sim \mathcal{N}\left(\begin{bmatrix} \mu_x \\ \mu_y \end{bmatrix}, \begin{bmatrix} \Sigma_x & 0 \\ 0 & \Sigma_y \end{bmatrix}\right)$$

with $A = \begin{bmatrix} I \\ 0 \end{bmatrix}$ and b = 0, a direct consequence is:

$$\begin{bmatrix} X \\ Y \end{bmatrix} \sim \mathcal{N}\left(\begin{bmatrix} \mu_x \\ \mu_y \end{bmatrix}, \begin{bmatrix} \Sigma_{xx} & \Sigma_{yx}^T \\ \Sigma_{yx} & \Sigma_{yy} \end{bmatrix}\right)$$

- Marginal Distributions: If [above] then $X \sim \mathcal{N}(\mu_x, \Sigma_{xx})$.

For the Kalman (LTS) smoother, it is also useful to look at the following property for multivariate normal densities $\mathcal{N}(x|\mu, \Sigma)$:

$$\mathcal{N}(x|x_0, P_0) \cdot \mathcal{N}(y|Hx, R) = \mathcal{N}\left(\begin{bmatrix} x \\ y \end{bmatrix} \middle| \begin{bmatrix} x_0 \\ Hx_0 \end{bmatrix}, \begin{bmatrix} P_0 & P_0 H^T \\ HP_0 & HP_0 H^T + R \end{bmatrix}\right)$$

This can be checked by deriving the marginal distribution of *X* and the conditional distribution of *Y|X* of the multivariate normal distribution on the right-hand side. Overall, we can now derive a Bayesian-type equation of the form *p(x)p(y|x) = p(y)p(x|y)*

$$\mathcal{N}(x|x_0, P_0 \cdot \mathcal{N}(y|Hx + a, R) = \mathcal{N}(y \mid Hx\_0, H\,P\_0\,H^\wedge T + R) \cdot \dots$$

$$\dots \cdot \mathcal{N}(x|x_0 + P_0 H^T (HP_0 H^T + R)^{-1}(y - Hx_0), P_0 - P_0 H^T (HP_0 H^T + R)^{-1} HP_0)$$

*Kalman filter equations*

Assume $x_{t-1}|y_1, \dots, y_{t-1} = x_{t-1}|y_{t-1} \sim \mathcal{N}(\mu_{t-1}, P_{t-1})$, where $\mu_{t-1}$ denotes the expected value of the object state for the previous time step, and where only $\mu_0$ and $P_0$ are given, as well as

$$x_t = Fx_{t-1} + v_t \qquad v_t \sim \mathcal{N}(0, Q_t)$$

$$y_t = Hx_t + e_t \qquad e_t \sim \mathcal{N}(0, R_t),$$

where *v* and *e* are independent noise variables, F is a transition model, H is an observation model, $Q_t$ denotes a process covariance, $R_t$ denotes an observation noise/uncertainty, $y_t$ is the observation at time or time step *t*, $x_t$ is the object state at time or time step *t* and $x_{t-1}$ the object state of a previous time/time step. According to the affine transformation rule:

$$\begin{bmatrix} x_{t-1} \\ v_t \\ e_t \end{bmatrix} \sim \mathcal{N}\left(\begin{bmatrix} \mu_{t-1} \\ 0 \\ 0 \end{bmatrix}, \begin{bmatrix} P_{t-1} & 0 & 0 \\ 0 & Q_t & 0 \\ 0 & 0 & R_t \end{bmatrix}\right)$$

$$\rightarrow \begin{bmatrix} x_t \\ y_t \end{bmatrix} = \begin{bmatrix} F & I & 0 \\ HF & H & I \end{bmatrix}\begin{bmatrix} x_{t-1} \\ v_t \\ e_t \end{bmatrix} \sim \mathcal{N}\left(\begin{bmatrix} F\mu_{t-1} \\ HF\mu_{t-1} \end{bmatrix}, \begin{bmatrix} FP_{t-1}F^T + Q_t & FP_{t-1}F^T H^T + Q_t H^T \\ HFP_{t-1}F^T + HQ_t & HFP_{t-1}F^T H^T + HQ_t H^T + R_t \end{bmatrix}\right)$$

$$\rightarrow \begin{bmatrix} x_t \\ y_t \end{bmatrix} \sim \mathcal{N}\left(\begin{bmatrix} \mu_{t|t-1} \\ H\mu_{t|t-1} \end{bmatrix}, \begin{bmatrix} P_{t|t-1} & P_{t|t-1}H^T \\ HP_{t|t-1} & HP_{t|t-1}H^T + R_t \end{bmatrix}\right),$$

where P denotes a covariance of an object state estimate, and where $\mu_{t|t-1} = F\mu_{t-1}$ and $P_{t|t-1} = FP_{t-1} = FP^T_{-1tF} + Q_t$. Thus, according to the above property of conditional distributions it follows that:

$$x_t|y_t \sim \mathcal{N}(\mu_{t|t-1} + P_{t|t-1}H^T(HP_{t|t-1}H^T + R_t)^{-1}(y - H\mu_{t|t-1}),$$

$$P_{t|t-1} - P_{t|t-1}H^T(HP_{t|t-1}H^T + R_t)^{-1}HP_{t|t-1})$$

$$\rightarrow x_t|y_t \sim \mathcal{N}(\mu_{t|t-1} + K_t(y - H\mu_{t|t-1}), (I - K_tH)P_{t|t-1})$$

with Kalman gain $K_t = P_{t|t-1}H^T(HP_{t|t-1}H^T + R_t)^{-1}$

*Parallels to the Student's t-distribution*

A multivariate student-t distribution $t_v(\mu,\Sigma)$ has the density

$$t_v(x|\mu, \Sigma) = \frac{\Gamma\left(\frac{v+p}{2}\right)}{\Gamma\left(\frac{v}{2}\right)v^{\frac{p}{2}}\pi^{\frac{p}{2}}\sqrt{\det(\Sigma)}}\left[1 + \frac{1}{v}(x - \mu)^T\Sigma^{-1}(x - \mu)\right]^{\frac{v+p}{2}},$$

where v is the degree of freedom discussed further down and $p$ is the dimension of $\mu$, i.e., $\Sigma$ is a $p \times p$ matrix. $\Sigma$ is the scale matrix, which can be seen as a scaled form of the covariance matrix.

So, the Student's t-distribution may be seen as a generalization of the multivariate normal distribution $\mathcal{N}(\mu, \Sigma)$ in the sense that a random variable $X \sim t_v(\mu,\Sigma)$ can be seen as being Gaussian $X \sim \mathcal{N}(\mu, \Phi)$ with unknown precision/covariance matrix $\Phi$. That is, $\Phi$ is in itself a random variable with Wishart distribution $W(\Sigma/v,v)$.

The Wishart distribution is a positive-definite-matrix-valued distribution, which generalizes the one-dimensional concept of the gamma distribution and the $\chi$-squared distribution with v degrees of freedom. As a more concrete definition, the Wishart distribution can be seen as the distribution of the empirical covariance matrix of samples $G_i \sim \mathcal{N}(0, \Sigma)$, i.e.,

$$\frac{1}{v}\sum_{i=1}^{v} G_iG_i^T \sim W\left(\frac{\Sigma}{v}, v\right).$$

It already becomes apparent, that if v becomes large, then $\frac{1}{v}\sum_{i=1}^{v} G_iG_i^T$ converges to Z in probability. Thus, we can expect $t_v(\mu, \Sigma)$ to converge to $\mathcal{N}(\mu, \Sigma)$. In practice, for v > 30, these distributions can be treated as superficially the same.

The Student's t-distribution inherits a few properties from the multivariate normal distribution:

1. Affine Transformations: If $X \sim t_v(\mu, \Sigma)$ and $Y = AX + b$ then $Y \sim t_v(A_\mu + b, A\Sigma A^T)$

2. Conditional Distributions: If $\begin{bmatrix}X\\Y\end{bmatrix} \sim t_v\left(\begin{bmatrix}\mu_x\\\mu_y\end{bmatrix}, \begin{bmatrix}\Sigma_{xx} & \Sigma_{yx}^T\\\Sigma_{yx} & \Sigma_{yy}\end{bmatrix}\right)$ then

$$Y|X \sim t_{v+p_z}(\mu_y + \Sigma_{yx}\Sigma_{xx}^{-1}(X - \mu_x), \frac{v+(X-\mu_x)^T\Sigma_{xx}^{-1}(X-\mu_x)}{v+p_x}(\Sigma_{yy} - \Sigma_{yx}\Sigma_{yx}^T)).$$

Note that the parameterization of these distributions is the same as the parameterization in the multivariate normal case, with the two exceptions. Firstly, the degrees of freedom increase with conditioning, i.e. conditioned Student's t-distribution are closer to normal distributions. And secondly, the covariance matrix of the conditioned matrix is weighted by the squared Mahalanobis distance $(X - \mu_x)^T \Sigma_{xx}^{-1} (X - \mu_x)$ of the observation $X$ to the expectation $\mu_x$ in such a way that the covariance matrix can at most shrink by a factor of $\frac{v}{v+p_z}$ but can increase to capture the degree of uncertainty an outlier brings.

However, while the marginal distributions can again be concluded from the property under affine transformations, finding a joint density for two independent Student's t-distribution variables is more elaborate.

Suppose $X \sim t_\chi(\mu_x, \Sigma_x)$ and $Y \sim t_\omega(\mu_y, \Sigma_y)$, then the intuitive thing would be to expect that

$$\begin{bmatrix} X \\ Y \end{bmatrix} \sim t_v \left( \begin{bmatrix} \mu_x \\ \mu_y \end{bmatrix}, \begin{bmatrix} \Sigma_x & 0 \\ 0 & \Sigma_y \end{bmatrix} \right)$$

for some degrees of freedom $\chi$. This is the case when $X|Y = X$ holds but

$$X|Y \sim t_{v+p_y} \left( \mu_x, \frac{v + (Y - \mu_y)^T \Sigma_y^{-1} (Y - \mu_y)}{v + p_y} \Sigma_x \right),$$

implies that if $Y$ is an outlier, then $X$ is more likely also an outlier. In particular, two random variables which are jointly distributed are not independent.

*The expected Mahalanobis distance*

Let's look at the expected value of $(Y - \mu_y)^T \Sigma_y^{-1} (Y - \mu_y)$ where $Y \sim t_v(\mu_y, \Sigma_y)$ is the marginalized distribution. Let $\Sigma_y = LL^T$, then for $\hat{Y} = L^{-1}(Y - \mu_y)$ it follows that $(Y - \mu_y)^T \Sigma_y^{-1} (Y - \mu_Y) = \hat{Y}^T \hat{Y}$ and $\hat{Y} \sim t_v(L^{-1}\mu_y - L^{-1}\mu_y, L^{-1}\Sigma_y L^{-1}) = t_v(0, I_{py})$. Now note that $\text{Tr}(yy^T) = \Sigma_i y_i y_i = y^T y$. Thus,

$$\mathbb{E}\left[ (Y - \mu_y)^T \Sigma_y^{-1} (Y - \mu_y) \right] = \mathbb{E}[\hat{Y}^T \hat{Y}] = \mathbb{E}[\text{Tr}(\hat{Y}\hat{Y}^T)] = \mathbb{E}\left[ \sum_{i=1}^{p_y} \hat{Y}_i^2 \right]$$

$$= \sum_{i=1}^{p_y} \mathbb{E}[\hat{Y}_i^2] = \sum_{i=1}^{p_y} \text{Cov}(\hat{Y})_{ii} = \text{Tr}(\text{Cov}(\hat{Y})).$$

Note that the covariance matrix of $\hat{Y} \sim t_v(0, I_{py})$ is $\frac{v}{v-2} p_y$, if $v > 2$ and undefined (i.e., $\infty$) otherwise. Thus

$$\mathbb{E}\left[ (Y - \mu_y)^T \Sigma_y^{-1} (Y - \mu_y) \right] = \frac{v}{v-2} p_y$$
. More generally, $\frac{1}{p_y} (Y - \mu_y)^T \Sigma_y^{-1} (Y - \mu_y) \sim F(p_y, v)$,

wherein F is Snedecor's F-distribution.

Note that by the conditioning property, it holds that

$$t_v\left(\begin{bmatrix}x_{t-1}\\v_t\\e_t\end{bmatrix}\middle|\begin{bmatrix}\mu_{t-1}\\0\\0\end{bmatrix}, \begin{bmatrix}a_tP_{t-1} & 0 & 0\\0 & a_tb_tQ_t & 0\\0 & 0 & R_t\end{bmatrix}\right)$$

$$= t_v(e_t|o, R_t) \cdot t_{v+p_y}\left(\begin{bmatrix}x_{t-1}\\v_t\end{bmatrix}\middle|\begin{bmatrix}\mu_{t-1}\\0\end{bmatrix}, \frac{v+e_t^TR_t^{-1}e_t}{v+p_y}a_t\begin{bmatrix}P_{t-1} & 0\\0 & bQ_t\end{bmatrix}\right)$$

$$= t_v(e_t|0, R_t) \cdot t_{v+p_y}\left(x_{t-1}|\mu_{t-1}, \frac{v+e_t^TR_t^{-1}e_t}{v+p_y}a_tP_{t-1}\right)$$

$$\cdot t_{v+p_y+p_z}\left(v_t\middle|0, \frac{v+p_y+(x_{t-1}-\mu_{t-1})^T\left(\frac{v+e_t^TR_t^{-1}e_t}{v+p_y}a_t\,P_{t-1}\right)^{-1}(x_{t-1}-\mu_{t-1})}{v+p_y+p_x}\frac{v+e_t^TR_t^{-1}e_t}{v+p_y}a_tb_tQ_t\right)$$

That is, if $a_t = \frac{v+p_y}{v+e_t^TR_t^{-1}e_t}$ and $b_t = \frac{v+p_y+p_x}{v+p_y+(x_{t-1}-\mu_{t-1})^T(P_{t-1})^{-1}(x_{t-1}-\mu_{t-1})}$ are known then one have found an approximation of the joint Student's t-distribution $t_{v-p_y}(x_{t-1}|\mu_{t-1}, P_{t-1}) \cdot t_{v+p_y+px}(v_t|0, Q_t) \cdot t_v(e_t|0, R_t)$ which is approximately exact (i.e., indicates the object state and noises approximately) in a small region around $[x_{t-1}, v_t, e_t]^T$. Note that one actually does not need to know the actual values of $x_{t-1}$ and $e_t$ for the approximation but only their Mahalanobis distance, as laid out in more detail below.

With this approximation, it is proposed to perform the following steps

$$t_v\left(\begin{bmatrix}x_t\\y_t\end{bmatrix}\middle|\begin{bmatrix}F & I & 0\\HF & H & I\end{bmatrix}\begin{bmatrix}\mu_{t-1}\\0\\0\end{bmatrix}, \begin{bmatrix}F & I & 0\\HF & H & I\end{bmatrix}\begin{bmatrix}F^T & F^TH^T\\I & H^T\\0 & I\end{bmatrix}\right)$$

$$= t_v\left(\begin{bmatrix}x_t\\y_t\end{bmatrix}\middle|\begin{bmatrix}F\mu_{t-1}\\HF\mu_{t-1}\end{bmatrix}, \begin{bmatrix}a_tFP_{t-1}F^T + a_tb_tQ_t & a_tFP_{t-1}F^TH^T + a_tb_tQ_tH^T\\a_tHFP_{t-1}F^T + a_tb_tHQ_t & a_tHFP_{t-1}F^TH^T + a_tb_tHQ_tH^T + R_t\end{bmatrix}\right)$$

$$= t_v\left(\begin{bmatrix}x_t\\y_t\end{bmatrix}\middle|\begin{bmatrix}\mu_{t|t-1}\\H\mu_{t|t-1}\end{bmatrix}, \begin{bmatrix}P_{t|t-1}^{a_t,b_t} & P_{t|t-1}^{a_t,b_t}H^T\\HP_{t|t-1}^{a_t,b_t} & HP_{t|t-1}^{a_t,b_t}H^T + R_t\end{bmatrix}\right)$$

$$= t_v\left(y_t\middle|H\mu_{t|t-1}, HP_{t|t-1}^{a_t,b_t}H^T + R_t\right)$$

$$\cdot t_{v+p_y}(x_t|\mu_{t|t-1} + P_{t|t-1}^{a_t,b_t}H^T\left(HP_{t|t-1}^{a_t,b_t}H^T + R_t\right)^{-1}(y_t - H\mu_{t|t-1}),$$

$$\frac{v + \left(y_t - H\mu_{t|t-1}\right)^T(H(P_{t|t-1}^{a_t,b_t}H^T\left(HP_{t|t-1}^{a_t,b_t}H^T + R_t\right)^{-1}(y_t - H\mu_{t|t-1})}{v + p_y}(P_{t|t-1}^{a_t,b_t}$$

$$- P_{t|t-1}^{a_t,b_t}H^T\left(HP_{t|t-1}^{a_t,b_t}H^T + R_t\right)^{-1}HP_{t|t-1}^{a_t,b_t}))$$

Thus, the proposed posterior distribution is

$$t_{v+p_y}(x_t|\mu_{t|t-1} + K\left(y_t - H\mu_{t|t-1}\right), \Delta(I - KH)P_{t|t-1}^{a_t,b_t})$$

with

$$P^{a_t,b_t}_{t|t-1} = a_t F P_{t-1} F^T + a_t b_t Q_t, \quad K = P^{a_t,b_t}_{t|t-1} H^T \left( H P^{a_t,b_t}_{t|t-1} H^T + R_t \right)^{-1}$$

$$\Delta = \frac{v + (y_t - H\mu_{t|t-1})^T \left( H P^{a_t,b_t}_{t|t-1} H^T + R_t \right)^{-1} (y_t - H\mu_{t|t-1})}{v + p_y}.$$

Note that both the distributions for $x_{t-1}$ and $x_t$ have $v + p_y$ degrees of freedom. Thus, the filter will not decay to the standard Kalman filter.

Now, according to the proposed approach, $a_t$ and $b_t$ are estimated/approximated to solve the joint Student's t-distribution.

*Estimating $a_t$*

For this, one can find a corresponding solution for $e_t^T R_t^{-1} e_t$ and $(x_{t-1} - \mu_{t-1})^T P_{t-1}^{-1}(x_{t-1} - \mu_{t-1})$. For $a_t$ and estimating $e_t^T R_t^{-1} e_t$ one has a priori only the assumed distribution of $e_t$. However, one can exploit information carried by the observed $y_t = Hx_t + e_t$ to get a more informed state of $e_t$. For that one can find the distribution of $e_t|y_t$ in the same way $x_t|y_t$ was found.

$$t_v \left( \begin{bmatrix} y_t \\ e_t \end{bmatrix} \middle| \begin{bmatrix} HF & H & I \\ 0 & 0 & I \end{bmatrix} \begin{bmatrix} \mu_{t-1} \\ 0 \\ 0 \end{bmatrix}, \begin{bmatrix} HF & H & I \\ 0 & 0 & I \end{bmatrix} \begin{bmatrix} a_t P_{t-1} & 0 & 0 \\ 0 & a_t b_t Q_t & 0 \\ 0 & 0 & R_t \end{bmatrix} \begin{bmatrix} F^T H^T & 0 \\ H^T & 0 \\ I & I \end{bmatrix} \right)$$

$$= t_v \left( \begin{bmatrix} y_t \\ e_t \end{bmatrix} \middle| \begin{bmatrix} HF\mu_{t-1} \\ 0 \end{bmatrix}, \begin{bmatrix} a_t HFP_{t-1}F^T H^T + a_t b_t HQ_t H^T + R_t & R_t \\ R_t & R_t \end{bmatrix} \right)$$

$$= t_v \left( \begin{bmatrix} y_t \\ e_t \end{bmatrix} \middle| \begin{bmatrix} HF\mu_{t-1} \\ 0 \end{bmatrix}, \begin{bmatrix} S^{a_t,b_t}_t & R_t \\ R_t & R_t \end{bmatrix} \right)$$

$$= t_v(y_t|HF\mu_{t-1}, S^{a_t,b_t}_t) \cdot t_{v+p_y}(e_t|R_t S^{a_t,b_t}_t{}^{-1}(y_t - HF\mu_{t-1}), \Delta \left( R_t - R_t S^{a_t,b_t}_t{}^{-1} R_t \right))$$

Thus $e_t|y_t$ has a Student's t-distribution with $v + p_y$ degrees of freedom, mean $m = R_t S^{a_t,b_t}_t{}^{-1}(y_t - HF\mu_{t-1})$ and covariance matrix $\frac{v+p_y}{v+p_y-2}\Delta(R_t - R_t S^{a_t,b_t}_t{}^{-1} R_t)$. Using this distribution one is able to find the distribution of $e_t^T R_t^{-1} e_t|y_t, a_t, b_t$, one might call $p(e_t^T R_t^{-1} e_t|y_t, a_t, b_t)$ and find the value of $e_t^T R_t^{-1} e_t$ which maximizes this likelihood. However, the distribution of $e_t^T R_t^{-1} e_t|y_t, a_t, b_t$ is a generalized non-central F-distribution for which the density is analytically described as a series and thus finding the maximum might be too much computational effort.

Thus, it is proposed to approximate the likelihood-maximizing value. For this, note on the one hand that approximating the most likely $e_t^T R_t^{-1} e_t|y_t, a_t, b_t$ by the estimate $m^T R_t^{-1} m$, where $m = \mathbb{E}[e_t|y_t, a_t, b_t]$ underestimates the target value (see, e.g., the extreme case m = 0, where the most likely Mahalanobis distance would be approximated by 0). And note that on the other hand, $\mathbb{E}[e_t^T R_t^{-1} e_t|y_t, a_t, b_t]$ overestimates the most likely Mahalanobis distance due to the heavy tail and asymmetry of the distribution of

$$e_t^T R_t^{-1} e_t | y_t, a_t, b_t$$

by the average of these over-/underestimating approximations. Thus overall, it is proposed to define $a_t$ as a fixed point of the equation

$$a_t = \frac{v + p_y}{v + \dfrac{\mathbb{E}[e_t^T R_t^{-1} e_t | y_t, a_t, b_t] + m^T R_t^{-1} m}{2}}$$

with the initial guess $a_t^0 = \dfrac{v + p_y}{v + (y_t - HF\mu_{t-1})^T R_t^{-1}(y_t - HF\mu_{t-1})}$ .

Now let $\tilde{e} = (e_t | y_t, a_t, b_t) - m$ then since $\mathbb{E}[\tilde{e}] = 0$

$$\mathbb{E}[e_t^T R_t^{-1} e_t | y_t, a_t, b_t] = \mathbb{E}[(\tilde{e} + m)^T R_t^{-1}(\tilde{e} + m)] = \mathbb{E}[e_t^T R_t^{-1} e_t] + m^T R_t^{-1} m$$

Furthermore, $\bar{e} = R_t^{-\frac{1}{2}} \tilde{e}$ has distribution $t_{v+p_y}\left(\bar{e} \mid 0, \Delta(I - R_t^{\frac{1}{2}} S_t^{a_t,b_t^{-1}} R_t^{\frac{1}{2}})\right)$ and by the expression of the Mahalanobis distance developed above

$$\mathbb{E}[e_t^T R_t^{-1} e_t | y_t, a_t, b_t] = \mathbb{E}[\bar{e}^T \bar{e}] + m^T R_t^{-1} m$$

$$= \frac{v + p_y}{v + p_y - 2} \Delta \mathrm{Tr}(I - R_t^{\frac{1}{2}} S_t^{a_t,b_t^{-1}} R_t^{\frac{1}{2}})$$

$$+ (y_t - HF\mu_{t-1})^T S_t^{a_t,b_t^{-1}} R_t R_t^{-1} R_t S_t^{a_t,b_t^{-1}} (y_t - HF\mu_{t-1})$$

$$= \frac{v + (y_t - H\mu_{t|t-1})^T r_t^{a_t,b_t})}{v + p_y - 2}\left(p_y - \mathrm{Tr}\left(R_t S_t^{a_t,b_t^{-1}}\right)\right) + r_t^{a_t,b_t^{T}} R_t r_t^{a_t,b_t}$$

for $r_t^{a_t,b_t} = S_t^{a_t,b_t^{-1}}(y_t - HF\mu_{t-1})$ . Also note that the trace is easily computable through elementwise multiplication $\odot$

$$\mathrm{Tr}\left(R_t S_t^{a_t,b_t^{-1}}\right)$$

$$= \sum_{i=1}^{p_y}\left(R_t S_t^{a_t,b_t^{-1}}\right)_{ii} = \sum_{i=1}^{p_y}\sum_{j=1}^{p_y}(R_t)_{ij}\left(S_t^{a_t,b_t^{-1}}\right)_{ji} = \sum_{iJ}\left(R_t^T \odot S_t^{a_t,b_t^{-1}}\right)_{ij}$$

*Estimating $b_t$*

It is proposed to perform the same steps to get an approximation of $(x_{t-1} - \mu_{t-1})^T (P_{t-1})^{-1}(x_{t-1} - \mu_{t-1})$.

$$t_v\left(\begin{bmatrix}x_{t-1}\\y_t\end{bmatrix}\middle|\begin{bmatrix}I&0&0\\HF&H&I\end{bmatrix}\begin{bmatrix}\mu_{t-1}\\0\\0\end{bmatrix},\begin{bmatrix}I&0&0\\HF&H&I\end{bmatrix}\begin{bmatrix}a_tP_{t-1}&0&0\\0&a_tb_tQ_t&0\\0&0&R_t\end{bmatrix}\begin{bmatrix}I&F^TH^T\\0&H^T\\0&I\end{bmatrix}\right)$$

$$=t_v\left(\begin{bmatrix}x_{t-1}\\y_t\end{bmatrix}\middle|\begin{bmatrix}\mu_{t-1}\\HF\mu_{t-1}\end{bmatrix},\begin{bmatrix}a_tP_{t-1}&a_tP_{t-1}F^TH^T\\a_tHFP_{t-1}&a_tHFP_{t-1}F^TH^T+a_tb_tHQ_tH^T+R_t\end{bmatrix}\right)$$

$$=t_v\left(\begin{bmatrix}x_{t-1}\\y_t\end{bmatrix}\middle|\begin{bmatrix}\mu_{t-1}\\HF\mu_{t-1}\end{bmatrix},\begin{bmatrix}a_tP_{t-1}&a_tP_{t-1}F^TH^T\\a_tHFP_{t-1}&S_t^{a_t,b_t}\end{bmatrix}\right)$$

$$=t_v(y_t|HF\mu_{t-1},S_t^{a_t,b_t})\cdot t_{v+p_y}(x_{t-1}|\mu_{t-1}+a_tP_{t-1}F^TH^TS_t^{a_t,b_t^{-1}}(y_t-HF\mu_{t-1}),$$

$$\Delta a_t(P_{t-1}-a_tP_{t-1}F^TH^TS_t^{a_t,b_t^{-1}}HFP_{t-1})).$$

For $m=a_tP_{t-1}F^TH^TS_t^{a_t,b_t^{-1}}(y_t-HF\mu_{t-1})$ and $z=(P)^{\frac{1}{2}}((x_{t-1}|y_t)-\mu_{t-1}-m)$. Then

$$z\sim t_{v+p_y}\left(0,\Delta a_t\left(I-a_tP_{t-1}^{\frac{1}{2}}F^TH^TS_t^{a_t,b_t^{-1}}HFP_{t-1}^{\frac{1}{2}}\right)\right)$$ and

$$\mathbb{E}[(x_{t-1}-\mu_{t-1})^T(P_{t-1})^{-1}(x_{t-1}-\mu_{t-1})|y_t]=\mathbb{E}[\left((P)^{\frac{1}{2}}z+m\right)^T(P_{t-1})^{-1}((P)^{\frac{1}{2}}z+m)]$$

$$=\mathbb{E}[z^Tz]+m^T(P_{t-1})^{-1}m$$

$$=\frac{v+p_y}{v+p_y-2}\Delta a_t\mathrm{Tr}(I-a_tP_{t-1}^{\frac{1}{2}}F^TH^TS_t^{a_t,b_t^{-1}}HFP_{t-1}^{\frac{1}{2}})$$

$$+a_t^2(y_t-HF\mu_{t-1})^TS_t^{a_t,b_t^{-1}}HFP_{t-1}(P_{t-1})^{-1}P_{t-1}F^TH^TS_t^{a_t,b_t^{-1}}(y_t-HF\mu_{t-1})$$

$$=\frac{v+(y_t-H\mu_{t|t-1})^TS_t^{a_t,b_t^{-1}}(y_t-H\mu_{t|t-1})}{v+p_y-2}a_t(p_y-a_t\cdot\mathrm{Tr}(HFP_{t-1}F^TH^TS_t^{a_t,b_t^{-1}}))$$

$$+a_t^2(y_t-HF\mu_{t-1})^TS_t^{a_t,b_t^{-1}}HFP_{t-1}F^TH^TS_t^{a_t,b_t^{-1}}(y_t-HF\mu_{t-1})$$

$$=\frac{v+(y_t-H\mu_{t-1})^Tr_t^{a_t,b_t}}{v+p_y-2}a_t(p_y-a_t\Sigma(HFP_{t-1}F^TH^T)\odot S_t^{a_t,b_t^{-1}})+a_t^2\cdot$$

$$r_t^{a_t,b_t^T}HFP_{t-1}F^TH^Tr_t^{a_t,b_t}$$

again with $S_t^{a_t,b_t}=a_tHFP_{t-1}F^TH^T+a_tb_tHQ_tH^T+R_t$ and $r_t^{a_t,b_t}=S_t^{a_t,b_t^{-1}}(y_t-HF\mu_{t-1})$.

In particular, note that $HFF_{t-1}F^TH^T$ and $HQ_tH^T$ can be pre-computed and each iteration of finding $a_t$ and $b_t$ may only require a single $p_y\times p_y$ matrix inversion, no additional matrix multiplication and otherwise on matrix-vector and component-wise matrix-multiplications (which are of the order of $(p_y^2)$ and basically free).

For an initial guess of $b_t$ it is proposed to ignore the observation $y_t$ and assume

$$x_{t-1} \sim t_{v+p_y}(\mu_{t-1}, P_{t-1}),$$

$$(x_{t-1} - \mu_{t-1})^T (P_{t-1})^{-1}(x_{t-1} - \mu_{t-1}) = z^T z \text{ with } z \sim t_{v+p_y}(0, I).$$

And as described before, it is proposed that if some $z \sim t_{v+py}(0, I)$ has standard normal Student's t-distribution, then $\frac{1}{p_x} z^T z \sim F(p_x, v + p_y)$. And the density of this F-distribution maximizes at its mode $\frac{p_x - 2}{p_x} \frac{v+p_y}{v+p_y+2}$ if $p_x > 2$ else 0. Thus, the initial guess of $b_t$ is

$$b_t^0 = \frac{v+p_y+p_x}{v+p_y+\max(p_x-2,0)\frac{v+p_y}{v+p_y+2}}.$$

Estimating the distribution of $x_{t-1}$ might appear more intuitive using $y_{t-1}$. However, note that the proposed estimate of $x_{t-1}$ is already conditioned on $y_{t-1}$.

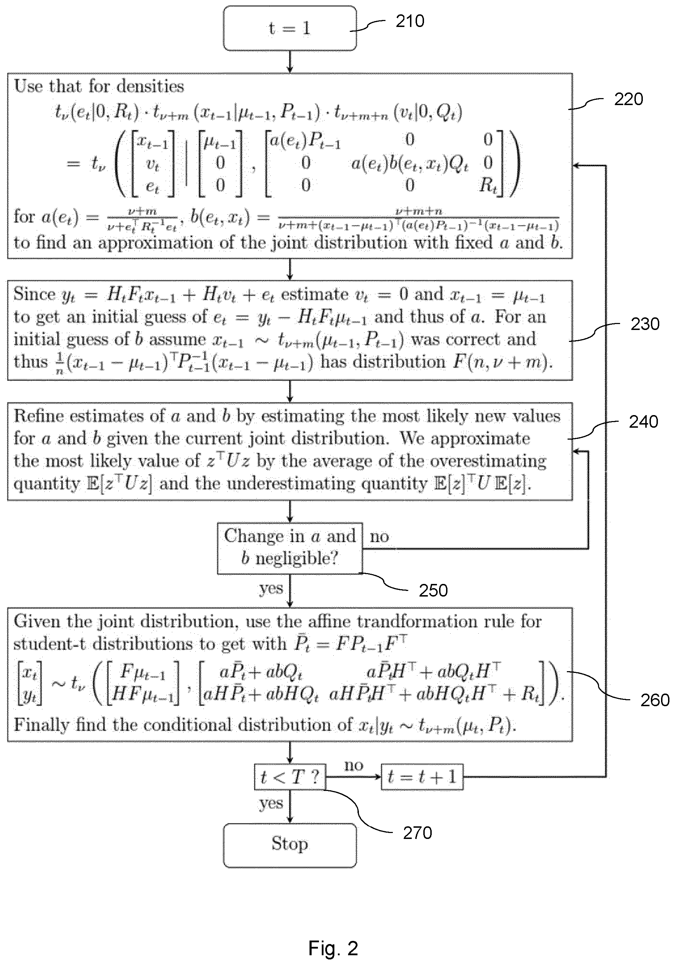

The proposed approach, e.g., is implemented in an iterative process, e.g., for tracking an object over time $T$ for multiple timesteps $t = 1, ..., T$, as laid out in more detail with reference to Fig. 2.

As can be seen from the flow chart, e.g., in a first step 210, a first time step $t$ is determined, e.g. $t = 1$.

Then, in a second step 220, the joint Student's t-distribution for the current time step is determined to find an approximation of it for values of the parameters $a(e_t)$ and $b(e_t, x_t)$.

In a following step 230, then, an initial guess for the parameters is made, as laid out above in more detail. Further, in a next step 240, the parameters are refined.

This may be done iteratively until the parameters do not change significantly anymore in doing so. For this, the change of the refinement is checked in another step 250. In order to do so, the change, e.g., is compared to a predefined threshold. In the case, the refinement changes the parameters significantly, they are refined further. If they do not change significantly, the parameters are used to solve the joint Student's t-distribution to determine the object state.

In the present example, it may be desired to stop the process after the predefined period $T$. To this end, another step 270 provides for checking if $t < T$ and to stop if $t$ is greater than $T$. In other embodiments, the process may be executed continuously. In such embodiments, step 270 may be omitted.

In practice, the proposed approach, e.g., may be implemented in a computer program to execute steps of the method using a computer.

An exemplary code of such a computer program could include instructions as follows (pseudo code instructions bold-faced):

Given timesteps $t = 1, ..., T$, linear state-transmission models $F_t \in \mathbb{R}^{n \times m}$, linear observation models $H_t \in \mathbb{R}^{m \times n}$, process covariances $Q_t \in \mathbb{R}^{n \times n}$, observation covariances $R_t \in \mathbb{R}^{m \times m}$, degrees of freedom v and observations $y_t \in \mathbb{R}^m$, as well as an initial guess of the true state by mean $\mu_0$ and covariance $P_0$.

Assume that a sequence of true states and noisy measurements is a Markov-Chain with additive Student's t-distributed noise, e.g.,

$$x_t = F_t x_{t-1} + v_t \qquad v_t \sim t_{v+n+m}(0, Q_t)$$

$$y_t = H_t x_t + e_t \qquad e_t \sim t_v(0, R_t)$$

Results in estimations of the true states $x_t$ by Student's t-distributions $t_{v+m}(\mu_t, P_t)$ only using observations $y_1, ..., y_t$ for each $t$.

for $t = 1, ...T$ do

$$\hat{P}_t = F P_{t-1} F^T, \; \hat{P}_t^H = H \hat{P}_t H^T, \; Q_t^H = H Q_t H^T$$

$$\hat{\mu}_t F \mu_{t-1}, \; r_t = y_t - H \hat{\mu}_t, \; i = 0$$

$$a^0 = \frac{v+m}{v+r_t^T R_t^{-1} r_t}, \quad b^0 = \frac{v+m+n}{v+m+\max(p_x-2,0)\frac{v+m}{v+m+2}}$$

(initial guess for a and b) **do** (for Fixpoint iteration of *a* and *b* to approximate the joint Student's t-distribution)

$$S = \left(a^i \hat{P}_t^H + a^i b^i Q_t^H + R_t\right)^{-1}, \quad s = S r_t$$

$$c = \frac{v+r_t^T s}{v+m-2}, \quad i = i+1$$

$$a^i = \frac{v+m}{v+c(m-\sum_{i,j}^m (R_t)_{ij} S_{ij})/2 + s^T R_t s}$$

$$b^i = \frac{v+m+n}{v+m+c\, a^{i-1}(m-a^{i-1}\sum_{i,j}^m (R_t)_{ij} S_{ij})\frac{1}{2}+(a^{i-1})^2 \cdot s^T \hat{P}_t^H s)}$$

**while** $\frac{|a^i - a^{i-1}|}{a^i + a^{i-1}} + \frac{|b^i - b^{i-1}|}{b^i + b^{i-1}} > 10^{-4}$ (or any other arbitrary/appropriate threshold)

$$P_{t|t-1} = a^{i-1}(\hat{P}_t + b^{i-1} Q_t)$$

$$\mu_t = \hat{\mu}_t + P_{t|t-1} H^T s$$

$$P_t = c\frac{v+m-2}{v+m} \cdot \left(P_{t|t-1} - P_{t|t-1} H^T S H P_{t|t-1}\right)$$

**end for**

Analogously, features and aspects of the described examples can be transferred to data smoothers, e.g., fixed-interval smoothers for data.

As the skilled person will appreciate, the described examples may be applied in various applications of Bayes filter or smoothers.

Bayes filter, e.g., are used in sensor data fusion where sensor data of two or more sensor is fused. Accordingly, the proposed approach may be applied for fusing sensor data of a first and at least one second sensor. However, applications of the proposed approach are not only limited to sensor data fusion but may also include other use cases.

*The Student's-t smoother*

Analogously to the above description, the proposed smoother uses a joint Student's t-distribution of two subsequent object state estimations $x_t$ and $x_{t+1}$ of a current time step *t* and a subsequent time step *t* + 1. The joint Student's t-distribution can be derived by:

$$t_{v+p_y}\left((x_t|y_1,\dots,y_t)\big|\mu_t, P_t\right) \cdot t_{v+p_y+p_x}(v_{t+1}|,0,Q_{t+1})$$

$$= t_{v+p_y}\left(\left(\begin{bmatrix} x_t \\ v_{t+1} \end{bmatrix}\Big| y_1,\dots,y_t\right)\Big|\begin{bmatrix} \mu_t \\ 0 \end{bmatrix}, \begin{bmatrix} P_t & 0 \\ 0 & b_{t+1}Q_{t+1} \end{bmatrix}\right)$$

Where $b_{t+1}$ is again $\dfrac{v+p_y+p_x}{v+p_y+(x_t-\mu_t)^T P_t^{-1}(x_t-\mu_t)}$

$$\rightarrow \begin{bmatrix} x_t \\ x_{t+1} \end{bmatrix} \Big| \, y_1, \dots, y_t =$$

$$\begin{bmatrix} I & 0 \\ F & I \end{bmatrix} \begin{bmatrix} x_t \\ v_{t+1} \end{bmatrix} \Big| \, y_1, \dots, y_{t+1} \sim t_{v+p_y}\left( \begin{bmatrix} \mu_t \\ F\mu_t \end{bmatrix}, \begin{bmatrix} P_t & P_t F^T \\ FP_t & FP_t F^T + b_{t+1}Q_{t+1} \end{bmatrix} \right)$$

$$\rightarrow x_t | x_{t+1}, y_1, \dots, y_t \sim t_{v+p_y+p_x}\left( \mu_t + P_t F^T (FP_t F^T + b_{t+1}Q_{t+1})^{-1}(x_{t+1} - F\mu_t) \right),$$

$$\Delta(P_t - P_t F^T (FP_t F^T + b_{t+1}Q_{t+1})^{-1} FP_t)$$

$$\Delta = \frac{v + p_y + (x_{t+1} - F\mu_t)^T (FP_t F^T + b_{t+1}Q_{t+1})^{-1}(x_{t+1} - F\mu_t)}{v + p_y + p_x}$$

The distribution of $x_t | y_1, \dots, y_T$ is now derived from the joint Student's t-distribution of $[x_t, x_{t+1}]^T | y_1, \dots, y_T$ and the marginal distribution of $x_t | y_1, \dots y_T$. Note that $x_t | x_{t+1}, y_1, \dots, y_T = x_t | x_{t+1}, y_1, \dots, y_t$ since the additional observations $y_{t+1}, \dots, y_T$ do not provide information not already present in $x_{t+1}$. Together with the given distribution of

$$x_{t+1} | y_1, \dots, y_T \sim t_{v+p_y}(\mu_{t+1}^T, P_{t+1}^T) \quad \text{and } J = P_t F^T (FP_t F^T + b_t Q_{t+1})^{-1}$$

$$t_{v+p_y+p_x}\left( (x_t | x_{t+1}, y_1, \dots, y_T) \mid \mu_T + J(x_{t+1} - F\mu_t), \Delta(P_t - JFP_t) \right)$$

$$\cdot t_{v+p_y}\left( (x_{t+1} | y_1, \dots, y_T) \mid \mu_{t+1}^T, P_{t+1}^T \right)$$

$$= t_{v+p_y}\left( \left( \begin{bmatrix} x_t \\ x_{t+1} \end{bmatrix} \Big| \, y_1, \dots, y_T \right) \Big| \begin{bmatrix} m_1 \\ \mu_{t+1}^T \end{bmatrix}, \begin{bmatrix} \Sigma_{11} & \Sigma_{12} \\ \Sigma_{12}^T & P_{t+1}^T \end{bmatrix} \right)$$

$$= t_{v+p_y+p_x}\left( (x_t | x_{t+1}, y_1, \dots, y_T) \mid m_1 + \Sigma_{12}(P_{t+1}^T)^{-1}(x_{t+1} - \mu_{t+1}^T), \frac{1}{b_{t+2}^T}(\Sigma_{11} - \right.$$

$$\left. \Sigma_{12}(P_{t+1}^T)^{-1}\Sigma_{12}^T) \right) \cdot t_{v+p_y}\left( (x_{t+1} | y_1, \dots, y_T) \mid \mu_{t+1}^T, P_{t+1}^T \right),$$

wherein

$$\frac{1}{b_{t+2}^T} = \frac{v + p_y + (x_{t+1} - \mu_{t+1}^T)^T (P_{t+1}^T)^{-1}(x_{t+1} - \mu_{t+1}^T)}{v + p_y + p_x}$$

For solving the joint Student's t-distribution, $m_1$, $\Sigma_{11}$, and $\Sigma_{12}$ can be found by comparison of variables:

$$J x_{t+1} = \Sigma_{12}(P_{t+1}^T)^{-1} x_{t+1}$$

$$\rightarrow \Sigma_{12} = J P_{t+1}$$

$$\mu_t - JF\mu_t = m_1 - \Sigma_{12}(P_{t+1}^T)^{-1}\mu_{t+1}^T$$

$$\rightarrow m_1 = \mu_t + J(\mu_{t+1}^T - F\mu_t)$$

$$\Delta(p_t) - JFP_t) = \frac{1}{b_{t+2}^T}\left(\Sigma_{11} - \Sigma_{12}(P_{t+1}^T)^{-1}\Sigma_{12}^T\right)$$

$$\Sigma_{11} = \Delta b_{t+2}^T P_t + JP_{t+1}^T J^T - \Delta b_{t+2}^T JFP_t$$

$$= \Delta b_{t+2}^T P_t + J\left(P_{t+1}^T - \Delta b_{t+2}^T (FP_t F^T + b_t Q_{t+1})\right)J^T,$$

where $FP_t = (FP_t F^T + b_t Q_{t+1})J^T$. Thus, by marginalizing the above joint Student's t-distribution one can obtain

$$x_t | y_1, \dots, y_T \sim t_{v+p_y}\left(\mu_t + J(\mu_{t+1}^T - F\mu_t), \Delta b_{t+2}^T P_t\right.$$

$$\left. + J\left(P_{t+1}^T - \Delta b_{t+2}^T (FP_t F^T + b_t Q_{t+1})\right)J^T\right)$$

Further, it is proposed to approximate $b_{t+2}^T$ and $b_{t+1}$ using the same approach as in the filter. Firstly, $\mu_{t+1}^T$ and $P_{t+1}^T$ already incorporate all available information $y_1, \dots, y_T$, therefore we will, similar to the initial guess of $b_{t+2}^T$, assume that $\frac{(x_{t+1} - \mu_{t+1}^T)^T (P_{t+1}^T)^{-1}(x_{t+1} - \mu_{t+1}^T)}{p_x} \sim F(p_x, v + p_y)$. Thus our approximation becomes

$$b_{t+2}^T = \frac{v + p_y + p_x}{v + p_y + \max(p_x - 2, 0)\frac{v + p_y}{v + p_y - 2}}$$

For $b_{t+1}$ we can first use the value found during the filtering process as initial guess and then use the found distribution of $x_t|y_1, \dots, y_T$ for a more informed estimate of $(x_t - \mu_t)^T P_t^{-1}(x_t - \mu_t)$ in the same way we found $b_{t+1}$ from $x_t|y_1, \dots, y_{t+1}$.

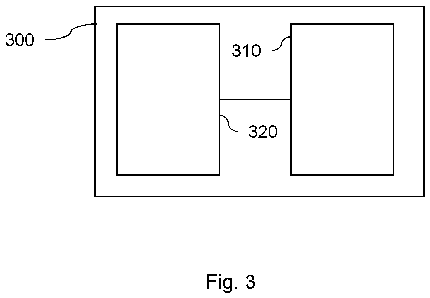

The proposed approach may be also implemented in an apparatus, as laid out in more detail with reference to Fig. 3.

Fig. 3 shows a block diagram schematically illustrating an exemplary embodiment of such an apparatus 300.

In embodiments, the one or more interfaces 310 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 320 may correspond to or comprise any type of programable hardware. So, examples of the data processing circuit 320, e.g., comprise a memory, microcontroller, field programable gate arrays, one or more central, and/or graphical processing units. To execute the proposed method, the data processing circuit 320 may be configured to access or retrieve an appropriate computer program for the execution of the proposed method from a memory of the data processing circuit 320 or a separate memory which is communicatively coupled to the data processing circuit 320.

In practice, the proposed apparatus may be installed on a vehicle. So, embodiments may also provide a vehicle comprising the proposed apparatus. In implementations, the apparatus, e.g., is part or a component of the ADS.

In the foregoing description, various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is

**EP 4 524 778 A1**

intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

**Claims**

1. A method (100) for a Bayes filter or smoother, the method (100) comprising:

   obtaining (110) an observation of an object state;
   determining (120) the object state based on a joint Student's t-distribution, wherein determining the object state comprises approximating the joint Student's t-distribution of distributions for an object state estimate in a previous time step, a process noise, and the observation, wherein the joint Student's t-distribution is based on a first and at least one second parameter, and wherein determining the object state comprises adapting the first parameter and the second parameter.

2. The method (100) of claim 1, wherein the first parameter is a parameter for the object state estimate and the process noise and the second parameter is a parameter for the process noise.

3. The method (100) of claim 1 or 2, wherein the joint Student's t-distribution is:

$$
t_v \left( \begin{bmatrix} x_{t-1} \\ v_t \\ e_t \end{bmatrix} \middle| \begin{bmatrix} \mu_{t-1} \\ 0 \\ 0 \end{bmatrix}, \begin{bmatrix} a_t P_{t-1} & 0 & 0 \\ 0 & a_t b_t Q_t & 0 \\ 0 & 0 & R_t \end{bmatrix} \right)
$$

   , wherein $Q_t$ represents a process covariance for the process noise, $P_{t-1}$ represents a covariance of the object state estimate, $a_t$ represents the first parameter, $b_t$ represents the second parameter, $x_{t-1}$ represents the object state estimate, $v_t$ represents the process noise, $e_t$ represents an observation uncertainty, $\mu_{t-1}$ represents the mean state for the object state estimate at the previous time step, and $R_t$ represents a covariance for the observation uncertainty.

4. The method (100) of any one of the preceding claims, wherein determining the state of the object based on a joint Student's t-distribution comprises solving the joint Student's t-distribution based on an approximation for the first and the second parameter.

5. The method (100) of claim 4, wherein the approximation comprises adjusting the first and the second parameter based on the observation and one or more previous approximations.

6. The method (100) of claim 4 or 5, wherein the approximation comprises:

   obtaining initial guess for the first and the second parameter, wherein the initial guess for the first parameter is

$$
a_t^0 = \frac{v + p_y}{v + (y_t - HF\mu_{t-1})^T R_t^{-1} (y_t - HF\mu_{t-1})},
$$
   and the initial guess for the second parameter is

$$
b_t^0 = \frac{v + p_y + p_x}{v + p_y + \frac{\max(p_x - 2, 0)}{a_t^0} \frac{v + p_y}{v + p_y + 2}},
$$
   wherein $v$, $p_y$, and $p_x$ represent degrees of freedom, $y_t$ represents a state observation indicative of the observation, $R_t$ represents a covariance for the observation uncertainty, $\mu_{t-1}$ represents the mean state for the state estimate at the previous time step, H represents an observation model, and $F$ represents a transition model; and
   refining the initial guess for the first and the second parameter.

7. The method (100) of any one of the preceding claims, wherein the observation is indicative of sensor data of a first and at least one second sensor, and wherein the method (100) is applied for fusing the sensor data of the first and the second sensor.

8. The method (100) of any one of the preceding claims, wherein the method (100) is for the use of a vehicle, and wherein the observation is indicative of sensor data from one or more sensors of the vehicle.

9. The method (100) of any one of the preceding claims, wherein the object is a traffic participant.

10. The method (100) of claim 9, wherein the state indicates a position and/or motion of the traffic participant.

11. A computer program comprising instructions which, when the computer program is executed by a computer, cause the computer to carry out the method (100) of any one of the preceding claims.

12. An apparatus (300) comprising:

    one or more interfaces (310) for communication; and
    a data processing circuit (320) configured to execute the method (100) of any one of the claims 1 to 10.

13. A vehicle comprising the apparatus (300) of claim 12.

100

| Obtaining an observation of an object state | 110 |
|---|---|
| Determining the object state based on a joint Student's t-distribution | 120 |

Fig. 1

$$t = 1 \qquad 210$$

220

Use that for densities
$$t_\nu(e_t|0, R_t) \cdot t_{\nu+m}(x_{t-1}|\mu_{t-1}, P_{t-1}) \cdot t_{\nu+m+n}(v_t|0, Q_t)$$
$$= t_\nu\left(\begin{bmatrix} x_{t-1} \\ v_t \\ e_t \end{bmatrix} \middle| \begin{bmatrix} \mu_{t-1} \\ 0 \\ 0 \end{bmatrix}, \begin{bmatrix} a(e_t)P_{t-1} & 0 & 0 \\ 0 & a(e_t)b(e_t, x_t)Q_t & 0 \\ 0 & 0 & R_t \end{bmatrix}\right)$$

for $a(e_t) = \frac{\nu+m}{\nu+e_t^\top R_t^{-1} e_t}$, $b(e_t, x_t) = \frac{\nu+m+n}{\nu+m+(x_{t-1}-\mu_{t-1})^\top (a(e_t)P_{t-1})^{-1}(x_{t-1}-\mu_{t-1})}$
to find an approximation of the joint distribution with fixed $a$ and $b$.

230

Since $y_t = H_t F_t x_{t-1} + H_t v_t + e_t$ estimate $v_t = 0$ and $x_{t-1} = \mu_{t-1}$ to get an initial guess of $e_t = y_t - H_t F_t \mu_{t-1}$ and thus of $a$. For an initial guess of $b$ assume $x_{t-1} \sim t_{\nu+m}(\mu_{t-1}, P_{t-1})$ was correct and thus $\frac{1}{n}(x_{t-1} - \mu_{t-1})^\top P_{t-1}^{-1}(x_{t-1} - \mu_{t-1})$ has distribution $F(n, \nu+m)$.

240

Refine estimates of $a$ and $b$ by estimating the most likely new values for $a$ and $b$ given the current joint distribution. We approximate the most likely value of $z^\top U z$ by the average of the overestimating quantity $\mathbb{E}[z^\top U z]$ and the underestimating quantity $\mathbb{E}[z]^\top U \mathbb{E}[z]$.

Change in $a$ and $b$ negligible? — no

yes — 250

260

Given the joint distribution, use the affine trandformation rule for student-t distributions to get with $\bar{P}_t = F P_{t-1} F^\top$
$$\begin{bmatrix} x_t \\ y_t \end{bmatrix} \sim t_\nu\left(\begin{bmatrix} F\mu_{t-1} \\ HF\mu_{t-1} \end{bmatrix}, \begin{bmatrix} a\bar{P}_t + abQ_t & a\bar{P}_t H^\top + abQ_t H^\top \\ aH\bar{P}_t + abHQ_t & aH\bar{P}_t H^\top + abHQ_t H^\top + R_t \end{bmatrix}\right).$$
Finally find the conditional distribution of $x_t|y_t \sim t_{\nu+m}(\mu_t, P_t)$.

$t < T$ ? — no → $t = t+1$

yes

Stop — 270

Fig. 2

300

310

320

Fig. 3

| | Europäisches Patentamt European Patent Office Office européen des brevets | **EUROPEAN SEARCH REPORT** | Application Number EP 23 19 7459 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG YULONG ET AL: "A Novel Robust Student's t-Based Kalman Filter", IEEE TRANSACTIONS ON AEROSPACE AND ELECTRONIC SYSTEMS, IEEE SERVICE CENTER, PISCATAWAY, NJ, US, vol. 53, no. 3, 7 June 2017 (2017-06-07), pages 1545-1554, XP011651979, ISSN: 0018-9251, DOI: 10.1109/TAES.2017.2651684 [retrieved on 2017-06-07] sections I-III; * abstract * | 1-13 | INV. G06F17/18 B60W60/00 G06T7/292 G06V10/00 |
| X | BERNTORP KARL ET AL: "Approximate Noise-Adaptive Filtering Using Student-t Distributions", 2018 ANNUAL AMERICAN CONTROL CONFERENCE (ACC), AACC, 27 June 2018 (2018-06-27), pages 2745-2750, XP033387117, DOI: 10.23919/ACC.2018.8430902 [retrieved on 2018-08-09] sections I-III; * abstract * | 1-13 | |

TECHNICAL FIELDS SEARCHED (IPC)

G06F
B60W
G06T
G06V

The present search report has been drawn up for all claims

| Place of search | Date of completion of the search | Examiner |
|---|---|---|
| Berlin | 29 February 2024 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)